# EUROPÄISCHE PATENTSCHRIFT

(11) **EP 3 087 259 B1**
(45) Veröffentlichungstag und Bekanntmachung des Hinweises auf die Patenterteilung: **08.05.2019**
(21) Anmeldenummer: 14825287.7
(22) Anmeldetag: 16.12.2014
(51) Int. Cl.: F01M 11/04, F16H 57/04

(54) **DICHTANORDNUNG**
SEALING ARRANGEMENT
ENSEMBLE D'ÉTANCHÉITÉ

(30) Priorität: 23.12.2013 DE 202013105922 U
(43) Veröffentlichungstag der Anmeldung: 02.11.2016
(73) Patentinhaber: Flaig, Hartmut, 78554 Aldingen (DE)
(72) Erfinder: Flaig, Hartmut, 78554 Aldingen (DE)
(74) Vertreter: Patentanwälte Behrmann Wagner PartG mbB
(86) Internationale Anmeldenummer: PCT/EP2014/078001
(87) Internationale Veröffentlichungsnummer: WO 2015/097021

(56) Entgegenhaltungen:
- DE-A1- 10 321 544
- DE-B4-102006 046 631
- JP-A- H0 734 840

## Beschreibung

Die Erfindung betrifft eine Dichtanordnung, beispielsweise ein Getriebegehäuse mit einer Dichtschraube gemäß dem Oberbegriff des Anspruchs 1.

Aus der DE 10 2006 046 631 B1 des Anmelders ist eine Dichtschraube zum Verschließen einer Ölleitung oder eines Ölbehälters bekannt, die sich kosteneffektiv in großen Stückzahlen durch Kaltfließpressen herstellen lässt. Die bekannte Dichtschraube umfasst einen plattenförmigen Schraubenkopf sowie einen sich von diesem ausgehend nach vorne erstreckenden Schaft mit Außengewinde. In der unteren Stirnseite des Schraubenkopfes ist eine Ringnut vorgesehen, die radial außen von einer ringförmigen Dichtfläche zur Anlage an einer Auflagefläche eines Aufnahmeelementes dient. In der Druckschrift ist beschrieben, dass es vorteilhaft ist, die Dichtschraube ohne zusätzliche Ringdichtung einzusetzen. Diese Forderung bereitet in der Praxis bei Überschreiten enger Fertigungstoleranzen jedoch Probleme. Eine weitere Dichtschraube ist aus der CA 954 398 A bekannt.

Ausgehend von dem vorgenannten Stand der Technik liegt der Erfindung daher die Aufgabe zugrunde, eine Dichtanordnung mit einer Dichtschraube anzugeben, mit der eine Abdichtung einer die Dichtschraube aufnehmenden Innengewindeöffnung der Dichtanordnung auch bei größeren Fertigungstoleranzen sichergestellt werden kann. Ebenso besteht die Aufgabe darin, eine Dichtanordnung anzugeben, die ohne zusätzliche Ringdichtung, auch bei größeren Fertigungstoleranzen auskommt.

Diese Aufgabe wird hinsichtlich der Dichtanordnung mit den Merkmalen des Anspruchs 1 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Die Erfindung führt auf eine Dichtanordnung mit einem Aufnahmeelement und einer Dichtschraube, wobei die Dichtschraube wie im Folgenden erläutert werden wird ausgebildet ist. Minimum Voraussetzung ist, dass die Dichtschraube einen Schaft mit Außengewinde und einen Schraubenkopf, insbesondere mit Antrieb aufweist, wobei auf einer vorderen Ringfläche des Schraubenkopfes eine Dichtfläche ausgebildet ist und ganz besonders bevorzugt benachbart zur Dichtfläche eine koaxiale Ringnut vorgesehen ist. Die Dichtanordnung ist nun so angeordnet, dass die Dichtschraube in der Innengewindeöffnung während des Festziehens zum Ausgleichen von Planlauffehlern verkippen kann, wozu eine wie zuvor im Zusammenhang mit der Dichtschraube beschriebene Außengewindekontur realisiert werden kann. Auch ist es möglich, das dann bevorzugt eine zylindrische Hüllkontor aufweisende Außengewinde bei gleicher Steigung wie das Innengewinde so auszugestalten, dass dieses mit bezogen auf Normvorschriften unzulässigem Spiel in der Innengewindeöffnung aufnehmbar ist, um so ein Verkippen zu ermöglichen. Bevorzugt ist die Dichtschraube in dem Innengewinde, insbesondere im noch nicht festgezogenen Zustand ausgehend von aufeinanderliegenden Längsmittelachse von Schaft und Innengewinde in jede Richtung um einen Winkel zwischen 1° und 5°, vorzugsweise zwischen 1,5° und 4,5°, besonders bevorzugt zwischen 1,5° und 4°, ganz besonders bevorzugt zwischen 1,5° und 3° verkippbar, und somit in zwei einander diametral gegenüberliegende Richtungen um den doppelten Winkel.

Die Erfindung hat erkannt, dass Undichtigkeitsprobleme dann auftreten, wenn bei der Fertigung enge Toleranzen beim Planlauffehler der Dichtfläche nicht eingehalten werden, d.h. wenn die ringförmige Dichtfläche nicht exakt in einer Radialebene zur Längsmittelachse des Schaftes angeordnet ist, sondern gegenüber dieser geringfügig verkippt ist. Diese geringen Toleranzen einzuhalten ist insbesondere dann schwierig, wenn die Dichtschraube kosteneffektiv als Kaltfließpressteil hergestellt werden soll. Zum Ausgleich unzulässiger Planlauffehler schlägt die Erfindung vor, das Au-βengewinde der Dichtschraube so auszubilden und/oder so auf das, insbesondere als Norminnengewinde ausgebildete, Innengewinde des Aufnahmeelementes abzustimmen, dass die Dichtschraube beim Festziehen innerhalb der Innengewindeöffnung im Aufnahmeelement verkippbar ist, so dass sich die Dichtfläche zur Auflagefläche des Aufnahmeelementes ausrichten kann, insbesondere derart, dass die Dichtfläche vollumfänglich dichtend auf der Auflagefläche anliegt und Anpressdruckschwankungen minimiert werden, d.h., dass die Dichtfläche an jeder Umfangsposition mit zumindest näherungsweise gleichem Anpressdruck auf der Auflagefläche anliegt. Ganz besonders bevorzugt ist im Rahmen einer vorteilhaften Ausgestaltung der Dichtanordnung vorgesehen, dass der Anpressdruck (Flächendruck) auf die Dichtfläche in Umfangsrichtung weniger als 20%, vorzugsweise weniger als 10%, noch weiter bevorzugt weniger als 5% schwankt, was durch die erfindungsgemäße Verkippbarkeit der Dichtschraube um deren Längsmittelachse beim Festziehen ermöglicht wird. Bevorzugt ist die Dichtschraube so ausgebildet, dass diese auch dann noch verkippbar ist, wenn die Dichtschraube über mehr als 90% der Soll-Einschubtiefe, vorzugsweise 99% oder mehr ihrer Soll-Einschubtiefe in der Innengewindeöffnung aufgenommen ist. Wie bereits angedeutet, kann vorgenannte Verkippbarkeit dadurch erreicht werden, dass das Außengewinde eine spezielle, insbesondere sich zumindest Abschnittsweise verjüngende, Hüllkontur aufweist und/oder dadurch, dass das Außengewinde im Rahmen der Dichtanordnung kleiner gewählt wird als ein zum Innengewinde der Innengewindeöffnung gehörendes Norm-Außengewinde einer Norm-Gewindeverbindung, d.h., dass bewusst zulässige Toleranzen überschritten werden, um die Ausrichtbarkeit der Dichtschraube zum Aufnahmeelement durch Verkippen um die Längsmittelachse der Dichtschraube zu ermöglichen, so dass im Ergebnis die Längsmittelachse des Schaftes der Dichtschraube im festgezogenen Zustand bei entsprechendem Planlauffehler verkippt ist zur Längsmittelachse der die Dichtschraube aufnehmenden Innengewindeöffnung im Aufnahmeelement. Ganz besonders bevorzugt handelt es sich bei dem Aufnahmeelement um eine Flüssigkeitsleitung oder einen Flüssigkeitsbehälter, bevorzugt eine Ölleitung oder einen Ölbehälter, ganz besonders bevorzugt in einem Kraftfahrzeug. Besonders bevorzugt handelt es sich um Getriebegehäuse.

Eine Verkippbarkeit der Dichtschraube in einer Innengewindeöffnung kann weiterbildungsgemäß beispielsweise dadurch erreicht werden, dass das Außengewinde, insbesondere in einem vorderen Axialabschnitt (d.h. vom, bevorzugt plattenförmigen, Schraubenkopf abgewandten Axialabschnitt) und/oder an einem hinteren, d.h. dem Schraubenkopf zugewandten Axialabschnitt einen geringeren Außendurchmesser und/oder Flankendurchmesser aufweist als in einem axial hierzu benachbarten Bereich. Hierzu kann das Außengewinde beispielsweise eine Stufung aufweisen, d.h. mindestens zwei Außengewindeabschnitte, vorzugsweise mit der gleichen Steigung, die sich hinsichtlich des Außendurchmessers und/oder Flankendurchmessers unterscheiden. Besonders bevorzugt ist es jedoch, wenn ein kontinuierlicher bzw. mathematisch stetiger Übergang des Au-ßendurchmessers und/oder des Flankendurchmessers stattfindet, was dadurch erreicht werden kann, dass sich der Außengewindedurchmesser und/oder der Flankendurchmesser, beispielsweise konisch oder gekrümmt in Richtung eines vorderen und/oder hinteren Endes des Außengewindes verjüngt.

Ganz besonders zweckmäßig ist es dabei, wenn der sich verjüngende Abschnitt des Außengewindes eine Axialerstreckung aufweist, die mindestens einem Drittel, ganz besonders bevorzugt mindestens der Hälfte der Axialerstreckung des gesamten Außengewindes entspricht.

Als besonders vorteilhaft hat es sich herausgestellt, wenn sich der Außendurchmesser und/oder der Flankendurchmesser ausgehend von einem Norm-Außendurchmesser bzw. einem Norm-Flankendurchmesser, bevorzugt konisch oder alternativ gekrümmt in Richtung eines vorderen und/oder hinteren Endes des Außengewindes verjüngt, vorzugsweise bis auf einen Nicht-Norm-Außendurchmesser bzw. einen Nicht-Norm-Flankendurchmesser.

Grundsätzlich ist es möglich, dass sich der Außendurchmesser und/oder der Flankendurchmesser ausgehend von einem Startdurchmesser in beide Axialrichtungen verjüngt, insbesondere ausgehend von einem zumindest näherungsweise, bezogen auf die Axialerstreckung des Außendurchmesser mittleren Bereich, wobei hier eine konische Verjüngung in beide Richtungen realisiert werden kann oder beispielsweise eine sphärische oder sonst wie, konkav oder konvex gekrümmte Kontur.

Besonders zweckmäßig ist es jedoch, wenn sich der Außendurchmesser und/oder der Flankendurchmesser über mindestens 80%, vorzugsweise mindestens 90%, noch weiter bevorzugt zumindest näherungsweise 100% der Axialerstreckung des Außengewindes von einem vorderen Bereich des Außengewindes zu einem hinteren Bereich des Außengewindes oder alternativ von einem hinteren Bereich des Außengewindes zu einem vorderen Bereich des Außengewindes verjüngt, ganz besonders bevorzugt konisch (alternativ gekrümmt). Optimale Ergebnisse können erzielt werden, wenn sich der Außendurchmesser und/oder der Flankendurchmesser bzw. die zugehörige Hüllkontur des Außengewindes unter einem Konuswinkel aus einem Winkelbereich zwischen 1° und 5°, vorzugsweise zwischen 1,5° und 4,5°, besonders bevorzugt zwischen 1,5° und 4°, noch weiter bevorzugt zwischen 1,5° und 3° zur Längsmittelachse des Schaftes verjüngt. Dies bedeutet, dass die Mantelfläche der zugehörigen Hüllkontur unter vorgenanntem Winkel zur Längsmittelachse des Schaftes geneigt ist. Eine derartige, sich konisch verjüngende Kontur, vorzugsweise ausschließlich in eine Axialrichtung kann besonders einfach dadurch realisiert werden, dass eine Gewinderollierplatte unter einem Winkel, insbesondere einem vorstehend erwähnten Winkel bzw. einem Winkel aus einem vorstehend erwähnten Winkelbereich beim Rollierprozess geneigt angeordnet wird.

Besonders zweckmäßig ist es, wenn die Dichtschraube in einen von hinten her, d.h. von der dem Schaft abgewandten Seite her zugänglichen Antrieb aufweist, beispielsweise einen Mehrkantantrieb, bevorzugt einen Sechskantantrieb oder alternativ einen Torxantrieb oder einen sonstigen Antrieb. Bevorzugt befindet sich der Antrieb rückseitig im Schraubenkopf.

Zur Minimierung des Gewichtes der vorzugsweise aus Metall ausgebildeten Dichtschraube ist es bevorzugt, wenn in der vorderen Stirnseite des Schaftes eine Sacklochöffnung vorgesehen ist, d.h. der Schaft die Form eines Rohrstumpfes aufweist, wobei die Axialerstreckung des Sackloches, d.h. der Abstand zwischen Sacklochgrund und Sacklochöffnungsrand größer ist als die halbe Axialerstreckung des Außengewindes, vorzugsweise größer ist als 3/4 der Axialerstreckung des Außengewindes.

Um eine optimale Dichtwirkung durch Erhöhung der Flächenpressung zu erreichen ist es bevorzugt, wenn an der Unterseite des Schraubenkopfes, radial innerhalb der ringförmigen Dichtfläche eine Ringnut vorgesehen ist, wobei sich die Ringnut ganz besonders bevorzugt in Richtung eines Nutgrundes, noch weiter bevorzugt konisch oder parabelförmig verjüngt.

Um zu gewährleisten, dass die Dichtschraube bis zur Anlage der Dichtfläche an die Auflagefläche in das Aufnahmeelement, genauer die Innengewindeöffnung verschrauben lässt ist es bevorzugt, wenn axial zwischen Schraubenkopf und Außengewinde ein, bevorzugt außengewindefreier Axialabschnitt vorgesehen ist, dessen Außendurchmesser geringer ist als der Kerndurchmesser des Außengewindes, wobei es besonders zweckmäßig ist, wenn sich der Durchmesser hin zum hinteren Schraubenende in vorgenanntem Axialabschnitt verjüngt.

Ganz besonders bevorzugt ist es, wenn die Dichtanordnung ohne Ringdichtung zwischen Schraube und Aufnahmeelement auskommt, um die Innengewindeöffnung flüssigkeitsdicht und/oder gasdicht bei Anwendungsdruckdifferenz abzudichten.

Ganz besonders bevorzugt ist die Dichtanordnung Teil eines Getriebegehäuses oder eines Ölwannengehäuses eines Kraftfahrzeugs, d.h. das Aufnahmeelement ist besonders bevorzugt als Getriebegehäuse oder Ölwanne ausgestaltet.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: Eine dreidimensionale Darstellung einer zum Konzept der Erfindung ausgebildeten Dichtschraube für eine Dichtanordnung,
- Fig. 2: eine Längsschnittansicht der Dichtschraube gemäß Fig. 1,
- Fig. 3: ein Detail Z aus Fig. 2,
- Fig. 4: eine Ansicht auf die Dichtschraube von hinten,
- Fig. 5: eine Schnittansicht einer in Fig. 6 dargestellten Dichtanordnung, und
- Fig. 6: eine Dichtanordnung in einer Draufsicht.

In den Figuren sind gleiche Elemente und Elemente mit der gleichen Funktion mit den gleichen Bezugszeichen gekennzeichnet.

Die in den Figuren gezeigten Abmessungen und Winkelmaße sollen den Schutzbereich der Erfindung nicht beschränken - die Abmessungen und Winkelmaße sowie beliebige aus zwei der angegebenen Werte ergebende Verhältniswerte sollen als erfindungswesentlich im Sinne einer vorteilhaften Weiterbildung der Erfindung offenbart gelten.

In den Figuren ist eine als Öl-Verschlussschraube ausgebildete Dichtschraube 1 gezeigt.

Diese umfasst einen Schaft 2 mit Außengewinde 14 sowie einen plattenförmigen Schraubenkopf 3, der an ein hinteres Ende des Schaftes 2 angrenzt.

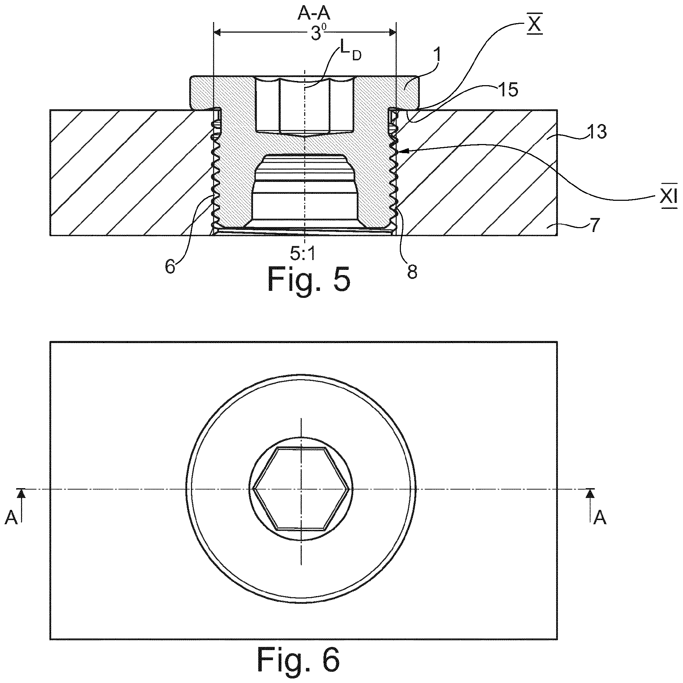

Axial zwischen dem Außengewinde 14 und dem Schraubenkopf 3 befindet sich ein ausgehend von dem Außengewinde 14 sich nach hinten verjüngender Axialabschnitt 4, dessen Durchmesser geringer ist als der Kerndurchmesser des Außengewindes. Hierdurch ist gewährleistet, dass sich die Dichtschraube 1 bis zu Anlage einer ringförmigen Dichtfläche 5 an der Unterseite des Schraubenkopfes 3 in eine Innengewindeöffnung 6 (vergleiche Fig. 5) einer Dichtanordnung 7 eindrehen lässt. Ein Innengewinde 8 dieser Innengewindeöffnung 6 ist als hier beispielhaft metrisches NormInnengewinde ausgebildet.

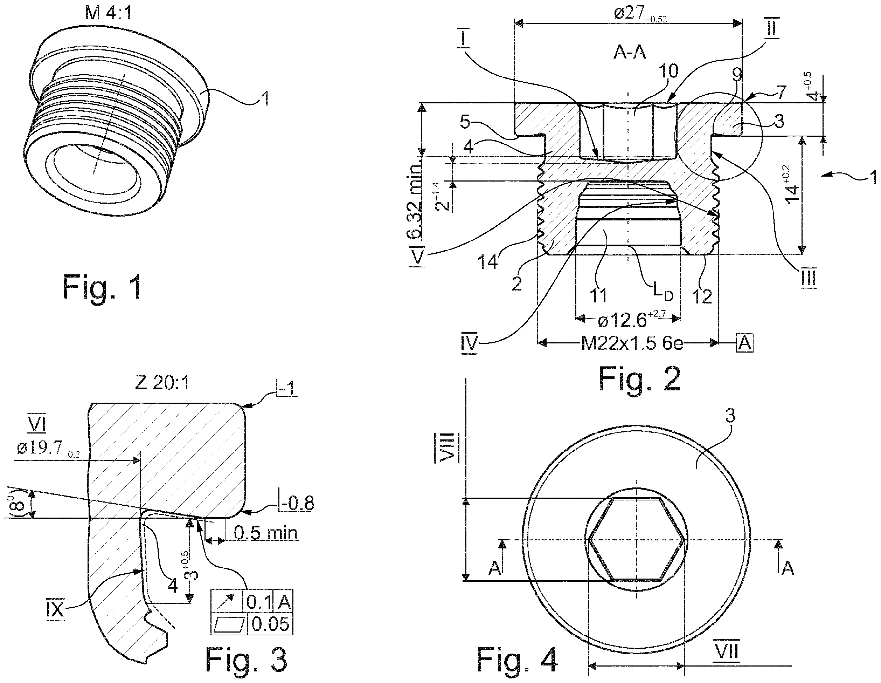

Weiter ist aus Fig. 2 zu entnehmen, dass der Schraubenkopf 3 auf seiner Unterseite hinterschnitten ist, in dem hier eine Ringnut 9 vorgesehen ist, um die Dichtfläche 5 zu verkleinern und damit die Flächenpressung derselben zu erhöhen.

Rückseitig im Schraubenkopf 3 befindet sich ein hier beispielsweise als Sechskantantrieb ausgebildeter Antrieb 10. Der Antrieb 10 erstreckt sich bis in den Schaft 2 hinein und ist koaxial zu einer Längsmittelachse L_{D} der Dichtschraube 1 angeordnet.

Ebenfalls koaxial zur Längsmittelachse L_{D} ist eine stirnseitige Sacklochöffnung 11 ausgerichtet, die sich stirnseitig im vorderen Ende 12 des Schaftes 2, d.h. auf der vom Schraubenkopf abgewandten Seite befindet.

Im gezeigten Ausführungsbeispiel weist das Außengewinde 14 eine Hüllkontur auf, die ein Verkippen der Dichtschraube 1 um ihre Längsmittelachse L_{D} ermöglicht, wenn diese in der Innengewindeöffnung 6 eines Aufnahmeelementes 13 einer Dichtanordnung 7 aufgenommen ist.

Beispielhaft und bevorzugt verjüngt sich hierzu das Außengewinde 14 axial durchgehend ausgehend von einem vorderen Ende des Außengewindes mit einem Norm-Außendurchmesser hin zum hinteren Ende des Au-ßengewindes 14 und zwar unter einem Konuswinkel von hier beispielhaft 3°.

Hierdurch kann die Dichtschraube 1 bei Einschrauben in die Innengewindeöffnung 6 relativ zur Längsmittelachse der Innengewindeöffnung verkippt werden, um somit Planlauffehler auszugleichen und zu gewährleisten, dass die ringförmige Dichtfläche 5 vollumfänglich auf der zugehörigen Auflagefläche 15 am Aufnahmeelement 13 aufliegt.

Anstatt der angezeigten, axial konisch durchgehenden Verjüngung des Außengewindes, welche bevorzugt ist, kann dieses sich auch nur axialabschnittsweise verjüngend ausgebildet sein und/oder nicht konisch verjüngend, beispielsweise gekrümmt verjüngend. Auch ist eine konkave oder konvexe Hüllkontur des Außengewindes realisierbar, wobei es grundsätzlich bevorzugt ist, dass zumindest ein axiales Ende des Außengewindes einen größeren Durchmesser aufweist als ein axial benachbarter Bereich, wobei der einen geringeren Durchmesser aufweisende Abschnitt des Außengewindes bevorzugt sich über mindestens 20%, vorzugsweise mindestens 30%, noch weiter bevorzugt über 50%, ganz besonders bevorzugt über 60% der Axialerstreckung des Außengewindes erstreckt. Auch ist es möglich bei der Realisierung einer zylindrischen Hüllkontor (oder alternativ einer sich verjüngenden Hüllkontur) des Außengewindes ein ein Verkippen ermöglichendes Spiel zwischen Außengewinde und Innengewinde zu realisieren, wenn nämlich das Außengewinde bewusst mehr Spiel innerhalb des Innengewindes aufweist, als dieses bei Einhaltung entsprechender Normvorschriften zulässig wäre.

### Bezugszeichenliste

- 1: Dichtschraube
- 2: Schaft
- 3: Schraubenkopf
- 4: Axialabschnitt
- 5: Dichtfläche
- 6: Innengewindeöffnung
- 7: Dichtanordnung
- 8: Innengewinde
- 9: Ringnut
- 10: Antrieb
- 11: Sacklochöffnung
- 12: vorderes Ende
- 13: Aufnahmeelement
- 14: Außengewinde
- 15: Auflagefläche

- L_{D}: Längsmittelachse der Dichtschraube

- I: Gestaltung des Sechskantgrundes nach Wahl des Herstellers
- II: Leichte Rundung oder Ansenkung bis ∅ 12.3 zulässig
- III: ähnl. Form B nach DIN 3852-1
- IV: Form nach Wahl des Herstellers
- V: Gewinde um vorzugsweise 1.5 - 3° konisch
- VI: Durchmesser
- VII: e=11.4 min.
- VIII: SW¹⁰ D12 (^{+0.19}_{+0.04})
- IX: Konisch
- X: Anlagefläche
- XI: Das Gewinde an der Verschlussschraube ist um 3° konisch. Das Gewinde im Gegenstück ist zylindrisch. Somit hat die Verschlussschraube im Gewinde zur Anlagefläche Luft. Die Schraube richtet sich automatisch zur Anlagefläche aus und dichtet diese ab. Wirklichkeitsfehler der Anlagefläche zum Gewinde bzw. am Gegenstück werden somit neutralisiert.

## Patentansprüche

1. Dichtanordnung (7) mit einer Dichtschraube, umfassend einen ein Außengewinde (14) aufweisenden Schaft (2) zum Verschrauben mit einem Innengewinde (8) einer Innengewindeöffnung (6) in einem Aufnahmekörper sowie einem hinteren Schraubenkopf (3), der an seiner Unterseite eine ringförmige Dichtfläche (5) zur Anlage an einer Auflagefläche (15) des Aufnahmekörpers aufweist und mit einem ein Innengewinde (8), vorzugsweise ein Norminnengewinde, aufweisenden Innengewindeöffnung (6) aufweisenden Aufnahmeelement (13), vorzugsweise eine Flüssigkeitsleitung oder ein Flüssigkeitsgefäß, bevorzugt eine Ölleitung oder ein Ölbehälter, besonders bevorzugt ein Getriebegehäuse, wobei sich die Dichtschraube (1) mit ihrer an der Unterseite ihres Schraubenkopfes (3) vorgesehenen, ringförmigen Dichtfläche (5) auf einer Auflagefläche (15) des Aufnahmeelementes (13) abstützt, wobei sich der Außendurchmesser des Außengewindes (14) und/oder der Flankendurchmesser des Außengewindes (14) hin zum vorderen und/oder hinteren Ende des Außengewindes (14), vorzugsweise konisch, verjüngt,
**dadurch gekennzeichnet,**
**dass** das Außengewinde (14) des Schaftes (2) derart konturiert ist und, insbesondere axial durchgehend, so auf das Innengewinde der Innengewindeöffnung (6) abgestimmt ist, dass das Außengewinde (14) mit einem ein Normspiel überschreitenden Spiel innerhalb des Innengewindes (8) aufgenommen ist, so dass die Dichtschraube (1) beim Festziehen um eine Längsmittelachse (L_{D}) innerhalb des sie aufnehmenden Innengewindes (8), vorzugsweise um einen Winkel zwischen 2° und 10°, vorzugsweise zwischen 3° und 9°, bevorzugt zwischen 3° und 8°, ganz besonders bevorzugt zwischen 3° und 6° verkippbar ist, damit sich die Dichtfläche (5) zur Auflagefläche (15) ausrichten kann.

2. Dichtanordnung nach Anspruch 1,
**dadurch gekennzeichnet,**
**dass** eine Längsmittelachse (L_{D}) des Schaftes der Dichtschraube (1) unter einem Winkel, insbesondere 1° und 5°, vorzugsweise zwischen 1,5° und 4,5°, bevorzugt zwischen 1,5° und 4°, ganz besonders bevorzugt zwischen 1,5° und 3° gegenüber einer Längsmittelachse der Innengewindeöffnung (6) geneigt ist.

3. Dichtanordnung nach einem der Ansprüche 1 oder 2,
**dadurch gekennzeichnet,**
**dass** die Dichtfläche (5) über ihren gesamten Umfang auf der Auflagefläche (15) des Aufnahmeelementes (13) aufliegt, wobei der Flächendruck auf die Dichtfläche (5) in Umfangsrichtung weniger als 20%, vorzugsweise weniger als 10%, bevorzugt weniger als 5% variiert.

4. Dichtanordnung nach einem der Ansprüche 1 bis 3,
**dadurch gekennzeichnet,**
**dass** der Außendurchmesser und/oder der Flankendurchmesser des Außengewindes (14), vorzugsweise um mindestens 5%, bevorzugt mindestens 10%, bevorzugt um mindestens 20%, kleiner ist als der Außendurchmesser eines zum Innengewinde der Innengewindeöffnung (6) zugehörigen Außengewindes (14) einer Norm-Gewindeverbindung.

5. Dichtanordnung nach einem der Ansprüche 1 bis 4,
**dadurch gekennzeichnet,**
**dass** die Dichtschraube (1) ohne Ringdichtung die Innengewindeöffnung (6) flüssigkeitsdicht und/oder gasdicht verschließt.

6. Dichtanordnung nach einem der vorhergehenden Ansprüche,
**dadurch gekennzeichnet,**
**dass** das Außengewinde (14), insbesondere in einem vorderen und/oder hinteren Axialabschnitt (4) einen geringeren Außendurchmesser und/oder Flankendurchmesser aufweist als in einem axial benachbarten Bereich.

7. Dichtanordnung nach einem der vorhergehenden Ansprüche,
**dadurch gekennzeichnet,**
**dass** sich der Außendurchmesser des Außengewindes (14) und/oder der Flankendurchmesser des Außengewindes (14) über eine Strecke, die mindestens einem Drittel, vorzugsweise mindestens der Hälfte der Axialerstreckung des Außengewindes (14) entspricht, verjüngt.

8. Dichtanordnung nach einem der vorhergehenden Ansprüche,
**dadurch gekennzeichnet,**
**dass** sich der Außendurchmesser und/oder der Flankendurchmesser ausgehend von einem Normaußendurchmesser bzw. einem Norm-Flankendurchmesser, bevorzugt konisch, verjüngt, bevorzugt auf einen Nicht-Norm-Außendurchmesser bzw. Nicht-Norm-Flankendurchmesser.

9. Dichtanordnung nach einem der vorhergehenden Ansprüche,
**dadurch gekennzeichnet,**
**dass** sich der Außendurchmesser und/oder der Flankendurchmesser über mindestens 80%, vorzugsweise mindestens 90%, noch weiter bevorzugt über zumindest näherungsweise 100% der Axialerstreckung des Außengewindes (14) vom vorderen zum hinteren oder vom hinteren zum vorderen Ende des Außengewindes (14), bevorzugt konisch, verjüngt.

10. Dichtanordnung nach einem der vorhergehenden Ansprüche,
**dadurch gekennzeichnet,**
**dass** sich der Außendurchmesser und/oder der Flankendurchmesser mit einem einem Konuswinkel aus einem Winkelbereich zwischen 1° und 5°, vorzugsweise zwischen 1,5° und 4,5°, bevorzugt zwischen 1,5° und 4°, ganz besonders bevorzugt zwischen 1,5° und 3° zur Längsmittelachse des Schaftes (2) verjüngt.

11. Dichtanordnung nach einem der vorhergehenden Ansprüche,
**dadurch gekennzeichnet,**
**dass** das Außengewinde (14) eine konkave oder konvexe, bevorzugt eine sphärische Hüllkontur aufweist.

12. Dichtanordnung nach einem der vorhergehenden Ansprüche,
**dadurch gekennzeichnet,**
**dass** die Dichtschraube (1) aus Metall, bevorzugt als Kaltfließpressteil, ausgebildet ist, wobei bevorzugt das Außengewinde (14) rolliert ist, ganz besonders bevorzugt mit einer, insbesondere unter einem Winkel zwischen 1° und 5°, vorzugsweise zwischen 1,5° und 4,5°, bevorzugt zwischen 1,5° und 4°, ganz besonders bevorzugt zwischen 1,5° und 3° zur Längsachse des Schaftes (2) angewinkelten Gewinderollierplatte.

13. Dichtanordnung nach einem der vorhergehenden Ansprüche,
**dadurch gekennzeichnet,**
**dass** die Dichtschraube (1), insbesondere im Schraubenkopf (3), einen Antrieb (10), insbesondere einen Mehrkant- oder Torxantrieb aufweist.

14. Dichtanordnung nach einem der vorhergehenden Ansprüche,
**dadurch gekennzeichnet,**
**dass** in der vorderen Stirnseite des Schaftes (2) ein Sackloch vorgesehen ist, wobei die Axialerstreckung des Sackloches bevorzugt größer ist als die halbe Axialerstreckung des Außengewindes (14).

15. Dichtanordnung nach einem der vorhergehenden Ansprüche,
**dadurch gekennzeichnet,**
**dass** in der Unterseite des Schraubenkopfes (3), radial innerhalb der Dichtfläche (5) eine koaxiale Ringnut (9) vorgesehen ist.

16. Dichtanordnung nach Anspruch 15,
**dadurch gekennzeichnet,**
**dass** sich die Ringnut (9) radial außen von einer umlaufenden Ringwand begrenz ist, und dass sich der Nutquerschnitt, bevorzugt konisch oder parabelförmig, in Richtung eines gerundeten Ringnutgrundes verjüngt.

17. Dichtanordnung nach einem der vorhergehenden Ansprüche,
**dadurch gekennzeichnet,**
**dass** axial zwischen dem Außengewinde (14) und dem Schraubenkopf (3) ein, bevorzugt gewindefreier, besonders bevorzugt einen sich in Richtung Schraubenkopf (3), bevorzugt konisch, verjüngenden Durchmesser aufweisender, Axialabschnitt vorgesehen ist, dessen Durchmesser geringer ist als der der Kerndurchmesser des Außengewindes (14).

## Claims

1. A sealing assembly (7) having a sealing screw, comprising a shaft (2) having an external thread (14) for screwing it to an internal thread (8) of an internal thread hole (6) in a receiving body as well as a rear screw head (3) which has an annular sealing surface (5) on its bottom for contact with a bearing surface (15) of the receiving body, and a receiving element (13), preferably a liquid line or a liquid vessel, preferentially an oil line or an oil container, especially preferentially a gear housing, which has an internal thread hole (6) having an internal thread (8), preferably a standard internal thread, the sealing screw (1) resting with its annular sealing surface (5), which is provided at the bottom of its screw head (3), on a bearing surface (15) of the receiving element (13), the outside diameter of the external thread (14) and/or the pitch diameter of the external thread (14) tapering, preferably conically, to the front and/or rear end of the external thread (14),
**characterized in that**
the external thread (14) of the shaft (2) is contoured in such a manner and is matched, in particular axially continuously, to the internal thread of the internal thread hole (6) in such a manner that the external thread (14) is received within the internal thread (8) with a clearance exceeding a standard clearance, so that the sealing screw (1) is tiltable within the internal thread (8) receiving it, preferably by an angle between 2° and 10°, preferably between 3° and 9°, preferentially between 3° and 8°, especially preferably between 3° and 6°, when being tightened around a longitudinal central axis (L_{D}) so that the sealing surface (5) can align with the bearing surface (15).

2. The sealing assembly according to claim 1,
**characterized in that**
a longitudinal central axis (L_{D}) of the shaft of the sealing screw (1) is inclined at an angle, in particular 1° and 5°, preferably between 1.5° and 4.5°, preferentially between 1.5° and 4°, especially preferentially between 1.5° and 3°, with respect to a longitudinal central axis of the internal thread hole (6).

3. The sealing assembly according to claim 1 or 2,
**characterized in that**
the sealing surface (5) is bearing on the bearing surface (15) of the receiving element (13) over its entire circumference, the surface pressure on the sealing surface (5) varying less than 20 %, preferably less than 10 %, preferentially less than 5 %, in the circumferential direction.

4. The sealing assembly according to any one of claims 1 to 3,
**characterized in that**
the outside diameter and/or the pitch diameter of the external thread (14) are/is smaller, preferably by at least 5 %, preferentially by at least 10 %, preferentially by at least 20 %, than the outer diameter of an external thread (14) of a standard threaded connection belonging to the internal thread of the internal thread hole (6).

5. The sealing assembly according to any one of claims 1 to 4,
**characterized in that**
the sealing screw (1) seals the internal thread hole (6) in a liquid-tight and/or a gas-tight manner without a ring seal.

6. The sealing assembly according to any one of the preceding claims,
**characterized in that**
the external thread (14) has, in particular in a front and/or a rear axial section (4), a smaller outside diameter and/or pitch diameter than in an axially adjacent section.

7. The sealing assembly according to any one of the preceding claims,
**characterized in that**
the outside diameter of the external thread (14) and/or the pitch diameter of the external thread (14) taper/s over a distance which corresponds to at least one third, preferably to at least half, of the axial extension of the external thread (14).

8. The sealing assembly according to any one of the preceding claims,
**characterized in that**
the outer diameter and/or the pitch diameter taper/s, preferably conically, starting from a standard outside diameter or a standard pitch diameter, preferably to a non-standard outside diameter or a non-standard pitch diameter.

9. The sealing assembly according to any one of the preceding claims,
**characterized in that**
the outside diameter and/or the pitch diameter taper/s, preferably conically, over at least 80 %, preferably over at least 90 %, even more preferentially over at least approximately 100 % of the axial extension of the external thread (14) from the front end to the rear end or from the rear end to the front end of the external thread (14).

10. The sealing assembly according to any one of the preceding claims,
**characterized in that**
the outside diameter and/or the pitch diameter taper/s with a cone angle from an angle range between 1° and 5°, preferably between 1.5° and 4.5°, preferentially between 1.5° and 4°, especially preferentially between 1.5° and 3° relative to the longitudinal central axis of the shaft (2).

11. The sealing assembly according to any one of the preceding claims,
**characterized in that**
the external thread (14) has a concave or a convex, preferably a spherical enveloping contour.

12. The sealing assembly according to any one of the preceding claims,
**characterized in that**
the sealing screw (1) is made of metal, preferably as a cold extrusion part, the external thread (14) preferentially being rolled, especially preferentially with a thread rolling plate, in particular angled at an angle between 1° and 5°, preferably between 1.5° and 4.5°, preferentially between 1.5° and 4°, especially preferentially between 1.5° and 3°, relative to the longitudinal axis of the shaft (2).

13. The sealing assembly according to any one of the preceding claims,
**characterized in that**
the sealing screw (1) has, in particular in the screw head (3), a drive (10), in particular a polygonal drive or a torx drive.

14. The sealing assembly according to any one of the preceding claims,
**characterized in that**
there is provided a blind hole in the front end face of the shaft (2), the axial extension of the blind hole being preferably greater than half the axial extension of the external thread (14).

15. The sealing assembly according to any one of the preceding claims,
**characterized in that**
a coaxial ring groove (9) is provided radially within the sealing surface (5) in the bottom of the screw head (3).

16. The sealing assembly according to claim 15,
**characterized in that**
radially at the outside, the ring groove (9) is delimited by a circumferential annular wall, and **in that** the groove cross-section tapers, preferably conically or parabolically, in the direction of a rounded ring groove bottom.

17. The sealing assembly according to any one of the preceding claims,
**characterized in that**
an axial section, preferentially non-threaded and especially preferentially having a diameter tapering, preferentially conically, in the direction of the screw head (3), is provided axially between the external thread (14) and the screw head (3), said axial section having a diameter that is smaller than the core diameter of the external thread (14).

## Revendications

1. Ensemble d'étanchéité (7) ayant une vis d'étanchéité, comprenant une tige (2) ayant un filetage extérieur (14) pour le visser à un filetage intérieur (8) d'un trou de filetage intérieur (6) dans un corps de réception ainsi qu'une tête de vis (3) arrière qui a une surface d'étanchéité (5) annulaire sur sa face inférieure pour prendre appui sur une surface d'appui (15) du corps de réception, et un élément récepteur (13), de préférence une conduite de liquide ou un récipient de liquide, préférentiellement une conduite d'huile ou un récipient d'huile, de préférence particulière un carter d'engrenage, qui a un trou de filetage intérieur (6) ayant un filetage intérieur (8), de préférence un filetage intérieur standard, la vis d'étanchéité (1) s'appuyant avec sa surface d'étanchéité (5) annulaire prévue sur la face inférieure de sa tête de vis (3) sur une surface d'appui (15) de l'élément récepteur (13), le diamètre extérieur du filetage extérieur (14) et/ou le diamètre sur flancs du filetage extérieur (14) s'effilant, de préférence coniquement, vers l'extrémité avant et/ou l'extrémité arrière du filetage extérieur (14),
**caractérisé en ce que**
le filetage extérieur (14) de la tige (2) est profilé de telle sorte et est adapté, notamment de façon axiale en continu, au filetage intérieur du trou de filetage intérieur (6) de telle sorte que le filetage extérieur (14) est reçu à l'intérieur du filetage intérieur (8) avec un jeu qui excède un jeu standard, de sorte que la vis d'étanchéité (1) est, lors du serrage autour d'un axe central longitudinal (L_{D}), basculable à l'intérieur du filetage intérieur (8) qui la reçoit, de préférence d'un angle entre 2° et 10°, de préférence entre 3° et 9°, préférentiellement entre 3° et 8°, de préférence particulière entre 3° et 6°, afin que la surface d'étanchéité (5) se puisse aligner sur la surface d'appui (15).

2. Ensemble d'étanchéité selon la revendication 1,
**caractérisé en ce que**
l'axe central longitudinal (L_{D}) de la tige de la vis d'étanchéité (1) est incliné par rapport à un axe central longitudinal du trou de filetage intérieur (6) sous un angle, notamment 1° et 5°, de préférence entre 1,5° et 4,5°, préférentiellement entre 1,5° et 4°, de préférence particulière entre 1,5° et 3.

3. Ensemble d'étanchéité selon la revendication 1 ou 2,
**caractérisé en ce que**
la surface d'étanchéité (5) s'appuie sur la surface d'appui (15) de l'élément récepteur (13) sur toute sa circonférence, la pression de surface sur la surface d'étanchéité (5) variant moins de 20 %, de préférence moins de 10 %, préférentiellement moins de 5 % dans la direction circonférentielle.

4. Ensemble d'étanchéité selon l'une quelconque des revendications 1 à 3,
**caractérisé en ce que**
le diamètre extérieur et/ou le diamètre sur flancs du filetage extérieur (14) sont/est inférieur/s, de préférence d'au moins 5 %, préférentiellement d'au moins 10 %, préférentiellement d'au moins 20 %, au diamètre extérieur d'un filetage extérieur (14) d'un raccord fileté standard appartenant au filetage intérieur du trou de filetage intérieur (6).

5. Ensemble d'étanchéité selon l'une quelconque des revendications 1 à 4,
**caractérisé en ce que**
la vis d'étanchéité (1) ferme le trou de filetage intérieur (6) de façon étanche aux liquides et/ou gaz sans une bague d'étanchéité.

6. Ensemble d'étanchéité selon l'une quelconque des revendications précédentes,
**caractérisé en ce que**
le filetage extérieur (14) a, notamment dans une section axiale (4) avant et/ou arrière, un diamètre extérieur et/ou un diamètre sur flancs inférieur/s que dans une section axialement adjacente.

7. Ensemble d'étanchéité selon l'une quelconque des revendications précédentes,
**caractérisé en ce que**
le diamètre extérieur du filetage extérieur (14) et/ou le diamètre sur flancs du filetage extérieur (14) s'effile/nt sur une distance correspondant à au moins un tiers, de préférence à au moins la moitié, de l'extension axiale du filetage extérieur (14).

8. Ensemble d'étanchéité selon l'une quelconque des revendications précédentes,
**caractérisé en ce que**
le diamètre extérieur et/ou le diamètre sur flancs s'effile/nt, de préférence coniquement, partant d'un diamètre extérieur standard ou d'un diamètre sur flancs standard, préférentiellement jusqu'à un diamètre extérieur non standard ou un diamètre sur flancs non standard.

9. Ensemble d'étanchéité selon l'une quelconque des revendications précédentes,
**caractérisé en ce que**
le diamètre extérieur et/ou le diamètre sur flancs s'effile/nt, de préférence coniquement, sur au moins 80 %, de préférence d'au moins 90 %, encore plus préférentiellement au moins approximativement 100 % de l'extension axiale du filetage extérieur (14) de l'extrémité avant à l'extrémité arrière ou de l'extrémité arrière à l'extrémité avant du filetage extérieur (14).

10. Ensemble d'étanchéité selon l'une quelconque des revendications précédentes,
**caractérisé en ce que**
le diamètre extérieur et/ou le diamètre sur flancs s'effile/nt avec un angle de cône d'une plage angulaire entre 1° et 5°, de préférence entre 1,5° et 4,5 °, préférentiellement entre 1,5° et 4°, de préférence particulière entre 1,5° et 3°, par rapport à l'axe central longitudinal de la tige (2).

11. Ensemble d'étanchéité selon l'une quelconque des revendications précédentes,
**caractérisé en ce que**
le filetage extérieur (14) a un contour enveloppant concave ou convexe, préférentiellement sphérique.

12. Ensemble d'étanchéité selon l'une quelconque des revendications précédentes,
**caractérisé en ce que**
la vis d'étanchéité (1) est formé de métal, préférentiellement comme pièce d'extrusion à froid, le filetage extérieur (14) de préférence étant roulé, de préférence très particulière avec une plaque de roulage filetée, notamment coudée à un angle entre 1° et 5°, de préférence entre 1,5° et 4,5°, préférentiellement entre 1,5° et 4°, de préférence très particulière entre 1,5° et 3°, par rapport à l'axe longitudinal de la tige (2).

13. Ensemble d'étanchéité selon l'une quelconque des revendications précédentes,
**caractérisé en ce que**
la vis d'étanchéité (1) a, notamment dans la tête de vis (3), un entraînement (10), notamment un entraînement polygonal ou un entraînement torx.

14. Ensemble d'étanchéité selon l'une quelconque des revendications précédentes,
**caractérisé en ce**
**qu'**un trou borgne est prévu dans la face d'extrémité avant de la tige (2), l'extension axiale du trou borgne étant préférentiellement supérieure à la moitié de l'extension axiale du filetage extérieur (14).

15. Ensemble d'étanchéité selon l'une quelconque des revendications précédentes,
**caractérisé en ce**
**qu'**une rainure annulaire (9) coaxiale est prévue radialement à l'intérieur de la surface d'étanchéité (5) dans la face inférieure de la tête de vis (3).

16. Ensemble d'étanchéité selon la revendication 15,
**caractérisé en ce que**
radialement á l'extérieur, la rainure annulaire (9) est délimitée par une paroi annulaire circonférentielle, et **en ce que** la section transversale de la rainure s'effile, de préférence coniquement ou paraboliquement, vers un fond arrondi de la rainure annulaire.

17. Ensemble d'étanchéité selon l'une quelconque des revendications précédentes,
**caractérisé en ce**
**qu'**une section axiale, préférentiellement sans filetage et de préférence particulière ayant un diamètre s'effilant, préférentiellement de manière conique, vers la tête de vis (3), est prévue axialement entre le filetage extérieur (14) et la tête de vis (3), ladite section axiale ayant un diamètre qui est inférieur au diamètre du noyau du filetage extérieur (14).
